# EUROPEAN PATENT SPECIFICATION

(11) **EP 1 363 153 B1**
(45) Date of publication and mention of the grant of the patent: **25.01.2006**
(21) Application number: 03009853.7
(22) Date of filing: 13.05.2003
(51) Int. Cl.: G02B 21/08

(54) **Ring illuminator**
Ringförmige Lichtquelle
Illuminateur annulaire

(30) Priority: 17.05.2002 JP 2002143462
(43) Date of publication of application: 19.11.2003
(73) Proprietor: MITUTOYO CORPORATION, Kanagawa 213-0012 (JP)
(72) Inventor: Shimokawa, Seiji, Takatsu-ku, Kawasaki, Kanagawa 213-0012 (JP); Nagahama, Tatsuya, Takatsu-ku, Kawasaki, Kanagawa 213-0012 (JP); Obata, Kuniaki, Takatsu-ku, Kawasaki, Kanagawa 213-0012 (JP); Matsubara, Hirotaka, Takatsu-ku, Kawasaki, Kanagawa 213-0012 (JP)
(74) Representative: Grünecker, Kinkeldey, Stockmair & Schwanhäusser Anwaltssozietät

(56) References cited:
- EP-A- 1 072 884
- US-A- 5 038 258
- US-A- 5 580 163
- US-A- 5 690 417
- US-A- 6 053 621

## Description

### BACKGROUND OF THE INVENTION

### 1. Field of the Invention

The present invention relates to a ring illuminator served for an optical measuring apparatus such as an optical microscope, an image measuring apparatus or the like, and more particularly to a ring illuminator which generates illumination light of a given hue based on light beams radiated from a plurality of light emitting elements capable of emitting light beams having colors different from each other. A similar type of ring illuminator is also known from EP 1072884A.

### 2. Description of the Related Art

Illumination of an object to be measured plays an extremely important role in obtaining a clear image of an object to be measured in an optical microscope for optically focusing an image of a portion to be measured of an object to be measured and observing the image, an image processing type measuring apparatus such as a measuring microscope, a tool microscope, a projector and a three-dimensional image measuring apparatus for inspecting and measuring a shape and a size of an object to be measured based on an image and the like.

As an illumination method served for an image processing type measuring apparatus or the like, there has been known a vertical downward radiation illumination method which radiates illumination light to an object to be measured from substantially right above the object to be measured. However, in many cases, the vertical downward radiation illumination method is used for measuring an object to be measured which has a relatively simple shape. Accordingly, in measuring an object to be measured having a complicated shape, for example, a step-like object to be measured having a large number of edge portions, there has been a case that shadows of the edge portions cannot be clearly detected.

To solve such a drawback, there has been proposed a ring illuminator which can clearly detect shadows of edge portions by radiating Illumination light to an object to be measured from a direction inclined at a given angle with respect to an optical axis of an optical system.

As a light source served for the ring illuminator, there has been known an optical fiber light source of a type which guides illumination light radiated from a halogen lamp or the like through optical fibers. However, the halogen lamp or the like also has disadvantages such as a large power consumption, a short lifetime and a slow response rate at the time of controlling lighting and extinguishing.

Further, in such a ring illuminator, as a method which adjusts luminance and an illumination angle of Illumination light radiated to an object to be measured, there has been known a method which forms fiber light sources into groups and controls lighting and extinguishing thereof for every group. Adopted here is means which prepares lamps for respective groups of light sources and controls lighting and extinguishing of lamps for every group or means which prepares shutter devices or the like for allowing transmission or interruption of light in the midst of or at end portions of fibers and controls lighting and extinguishing of the fiber light source of every group. However, these means necessitate a large number of lamps and the structure becomes complicated and hence, there arises a problem that the illuminator becomes large-sized and a manufacturing cost is increased.

On the other hand, recently, light emitting elements as represented by light emitting diodes (LED) have been attracting attention in view of characteristics thereof such as rapid responsivity, a long lifetime and the like and the utilization of the light emitting elements as light sources has been started in various technical fields along with the enhancement of luminance of the light emitting elements. Here, as light sources which can solve the drawbacks that the above-mentioned halogen lamps or the like have and can control lighting and extinguishing of the light sources, a ring illuminator which uses light emitting diodes has been proposed.

For example, there has been proposed a ring illuminator disclosed in Japanese Unexamined Patent Application Publication No. 10-54940 (related art 1). In the ring illuminator of the related art 1, a large number of light emitting diodes are provided as light sources, these light emitting diodes are concentrically arranged in a plurality of circular arrays (five arrays in an embodiment of the publication), and respective light emitting diodes are mounted such that their light emitting directions are set towards an object to be measured. Further, in this publication, there is disclosed a method in which, as a modification of a focusing method, the light emitting directions of respective light emitting diodes are arranged parallel to an optical axis and Fresnel lenses are arranged downstream of the light emitting directions so as to focus light on the object to be measured.

Further, in the ring illuminator disclosed in the publication, the light emitting diodes are formed into groups consisting of respective circular arrays and circumferential sectors, and control of lighting and extinguishing can be performed for every group. Accordingly, it is possible to perform the lighting and extinguishing control of the light emitting diodes which are arranged in a plurality of arrays as the light sources for every group and hence, the distribution of light to the object to be measured can be properly adjusted.

The ring illuminator disclosed in document EP1072884A mentioned above, comprises a similar arrangement of a plurality of light emitting diodes concentrically arranged in a plurality of circular arrays. The light emitting diodes are made up of at least two types of light emitting diodes, each type emitting a different light emitting colour. The illuminator comprises an annular printed circuit board supporting the light emitting diodes and an annular Fresnel lens is mounted beneath the light emitting diodes such that the light beams emitted by the light emitting diodes spread extensively in the tangential direction to be then directed onto the surface of the target work.

However, in the ring illuminator of the related art 1, light beams radiated from respective light emitting diodes, which face the object to be measured have intrinsic divergence angles and spread before reaching the object to be measured and hence, the enhancement of the illumination efficiency is not sufficient whereby there has been a drawback that it is necessary to install an extremely large number of light emitting diodes to ensure the necessary illuminance.

Further, in the related art 1, as another means to enhance the illumination efficiency, there is disclosed means which mounts Fresnel lenses in front of light emitting diodes and focuses illumination light on an object to be measured. However, this means is not provided for correcting the above-mentioned intrinsic divergence angles of the light emitting diodes and hence, it is difficult to achieve a remarkable enhancement of illumination efficiency.

Further, such Fresnel lenses have intrinsic focal lengths and hence, when a distance (operable distance) between the object to be measured and the ring illuminator is changed corresponding to the object to be measured at the time of measurement, the focal length and the operable distance of the Fresnel lens are displaced from each other so that the illumination light spreads whereby the illumination efficiency is lowered. Further, to maintain the illumination efficiency, the operable distance cannot be changed and hence, there arises a drawback that it is difficult to obtain an optimum illumination light for every object to be measured.

Further, there has been known a ring illuminator which includes an additional function which enables a control of an illumination angle with respect to an object to be measured and an illumination direction of illumination light so as to clearly detect conditions of edges and a surface of the object to be measured (related art 2). In the ring illuminator of the related art 2, plural types of rings in which light emitting diodes are mounted in a ring shape corresponding to specific illumination angles are prepared and the light emitting diodes of these rings are simultaneously or separately turned on so as to control the illumination angle. Further, the light emitting diodes which are formed into groups in the circumferential direction for every ring are subjected to lighting and extinguishing control so that the distribution of light to the object to be measured can be properly adjusted.

However, also in the ring illuminator of this related art 2, in the same manner as the above-mentioned related art 1, due to divergence angles of light beams radiated from respective light emitting diodes, the enhancement of the illumination efficiency is not sufficient and hence, there exists a drawback that it is necessary to mount a large number of light emitting diodes to ensure the necessary illuminance. Further; it is necessary to mount plural types of rings such that respective rings assume given angles and hence, the structure of the illuminator becomes complicated.

On the other hand, types of objects to be measured which are inspected or measured by an image processing type measuring apparatus or the like are extremely various such that the objects to be measured cover covering electronic parts such as printed circuit boards (PCB) or the like, mechanical parts, semiconductor parts, printed matters and the like. Further, these objects to be measured also have various surface colors. In the image processing type measuring apparatus or the like, by recognizing a shape or the like of the object to be measured as an image using a CCD (Charge Coupling Device) or the like and radiating illumination light having a proper hue (tone of color) corresponding to a surface color of the object to be measured at the time of measuring a size or the like by detecting position of edges or the like from the image, a contrast of an obtained image is emphasized so that the further enhancement of detection accuracy of edges can be expected.

As the ring illuminator which is capable of controlling the hue of such illumination light, in the above-mentioned ring illuminators of the related art 1 and the related art 2, a plurality of light emitting diodes are constituted of several types of, for example, three types of light emitting diodes which have respectively different light emitting colors of red (R), green (G), blue (B), and a lighting or extinguishing control is performed for the light emitting diodes of every light emitting color so that the hue of the illumination light can be controlled.

However, in the ring illuminators of the related art 1 and the related art 2, since the illumination efficiency is low, it is necessary to arrange a large number of light emitting diodes whereby there arises a drawback that the illuminator becomes large-sized and a manufacturing cost is increased. Further, as described above, it is possible to control the hue of the illumination light by arranging several types of, light emitting diodes having different light emitting colors. However, although the lights beams emitted toward the object to be measured from the light emitting diodes of respective light emitting colors are combined on the object to be measured, the distances and the angles of the light beams from respective light emitting diodes to the object to be measured are not constant and hence, the hue of the generated illumination light is not uniform so that there arises a drawback that an image of sufficiently high accuracy cannot be obtained.

It is an object of the present invention to provide a ring illuminator which can miniaturize the device and also can sufficiently enhance an image detection accuracy by enhancing the illumination efficiency.

### SUMMARY OF THE INVENTION

To achieve the above-mentioned object, the present invention provides a ring illuminator comprising the features set out in claim 1. That is, the ring illuminator includes a light source formed of a plurality of light emitting elements being arranged around an optical axis of an optical system and being formed of at least two types of light emitting elements each type of light emitting element having the same light emitting color different from the other type. Each group of light emitting elements of the same type are arranged in a ring shape around the optical axis in the same plane substantially orthogonal to the optical axis. Downstream of the light emitting directions of the light emitting elements, there is provided a combining unit configured by a mirror means which combines radiation light beams radiated from the light emitting elements and having light emitting colors different from each other to generate illumination light having a given hue. Further downstream of the generated illumination light, there is provided a focusing unit which focuses the illumination light at a given position along the optical axis.

Here, the expression "arranged in a ring shape around the optical axis" includes a circular annular arrangement, a triangular annular arrangement, a quadratic annular arrangement or a polygonal annular arrangement including a pentagonal annular arrangement about the optical axis. Further, an elliptical annular arrangement or an oblong annular arrangement around the optical axis are also included.

According to this constitution, the radiation light beams radiated from the light emitting elements having different light emitting colors are combined to the illumination light of the given hue by the combining unit arranged downstream of the radiation light beams, and the illumination light of the given hue is focused at the given position by the focusing unit. In this manner, the illumination light which is preliminarily combined into the given hue by the combining unit can be radiated and hence, it is possible to radiate the illumination light having the uniform hue corresponding to a surface color of an object to be measured. Accordingly, a contrast of an image obtained by an optical system is emphasized so that the accuracy of detection of edges or the like of the object to be measured can be sufficiently enhanced. Further, since the illumination efficiency can be enhanced by focusing the illumination light to a given position by focusing means, the mounting number of light emitting elements can be reduced so that the illuminator can be miniaturized.

The light emitting element groups, each group having a different light emitting color and arranged in a ring shape may be arranged such that each group is arranged in a spaced apart manner at a given distance along the optical axis direction, and the light emitting element groups may have the light emitting directions thereof arranged in the direction away from the optical axis.

Because of such a constitution, by arranging the light source such that the light emitting direction of the light emitting elements is directed in the direction substantially orthogonal to the optical axis of the optical system and away from the optical axis, among sizes of the illuminator which is formed by including the combining unit and the focusing unit arranged downstream of the light emitting direction, the size in the direction parallel to the optical axis can be made small. Accordingly, in mounting the illuminator to the optical system, the degree of freedom of the mounting position along the optical axis is increased, setting of the focusing range and the focusing position can be performed with high accuracy, and the detection accuracy of the image of the object to be measured can be enhanced.

The light emitting element groups, each group having a different light emitting color and arranged in a ring shape may be arranged such that each group is arranged along circles which differ in distance from the optical axis on substantially same planes which are substantially orthogonal to the optical axis, and the light emitting direction is arranged in the direction substantially parallel to the optical axis.

Because of such a constitution, by arranging the light source such that the light emitting direction of the light emitting elements is directed in the direction substantially parallel to the optical axis of the optical system, among sizes of the illuminator which is formed by including the combining unit and the focusing unit arranged downstream of the light emitting direction, the size in the radial direction about the optical axis can be made small.
Accordingly, in performing the measurement after mounting the illuminator to the optical system, the illuminator does not obstruct the measuring operation and the measuring operation can be rapidly performed.

The plurality of light emitting elements may be constituted of three types of light emitting diodes having respective light emitting colors of red (R), green (G), blue (B).

Due to such a constitution, by using the light emitting diodes which constitute typical light emitting elements, it is possible to provide the light source which can exhibit high responsivity, a long lifetime and the like which are features of the light emitting diodes. At the same time, by uniformly combining respective colors of red (R), green (G), blue (B) which are the three primary colors of light, a white light which is the basic color of the illumination light can be produced, while by properly changing the combining amounts of respective colors red (R), green (G), blue (B), the illumination light of various hues can be produced. Accordingly, the illumination light having an optimum hue can be radiated corresponding to the objects to be measured having various surface colors so that the accuracy of detection of edges or the like of the object to be measured can be further sufficiently enhanced.

The combining unit may be configured to include dichroic mirrors formed in a planar shape.

Due to such a constitution, with the use of the dichroic mirrors which have characteristics to allow light to pass therethrough or to reflect light thereon in response to a wavelength of light, by selectively reflecting or allowing the transmission of the light beams radiated from the light emitting elements and having light emitting colors which differ from each other, it is possible to combine the light beams having different light emitting colors so as to produce the illumination light having a given hue. Further, with the use of the dichroic mirrors having a simple planar shape, it is possible to constitute the combining unit inexpensively. Further, compared to a case which uses dichroic mirrors having a curved surface, the loci of the reflection light and the transmission light can be easily calculated. Accordingly, the arrangement and the mounting structure of the dichroic mirrors can be performed easily and, at the same time, the combining operation of the illumination light can be accurately performed.

The dichroic mirrors may have either characteristics which reflect light having a wavelength shorter than a given wavelength and allows light having a wavelength longer than the given wavelength to pass therethrough or characteristics which allow light having a wavelength shorter than a given wavelength to pass therethrough and reflect light having a wavelength longer than the given wavelength.

Due to such a constitution, the number of transition from the reflection to the transmission or from the transmission to the reflection corresponding to the wavelength of light is only once at a given wavelength and hence, compared to dichroic mirrors which perform the transition of characteristics between reflection and transmission twice or more times for a plurality of wavelengths, the number of layers of a mirror surface vapor-deposition film is small whereby the film forming processing is facilitated and the reflection and transmission efficiency of the dichroic mirrors can be enhanced.

The illumination light further downstream to the combining unit may be set to a direction on a plane and substantially orthogonal to the optical axis and away from the optical axis, the focusing unit is configured to include a reflection mirror which focuses the illumination light in the optical axis direction, and the reflection mirror includes a reflection surface having respective given curvatures with respect to two cross-sectional directions parallel to and orthogonal to the optical axis.

Due to such a constitution, the illumination light is reflected in the optical axis direction by the reflection mirror which is provided at a position further from the optical axis than the light source and the combining means and hence, an illumination angle of the illumination light radiated to the object to be measured is increased whereby when the object to be measured has a stereoscopic shape or the like, it is possible to clearly detect shadows of edge portions of the object to be measured. Further, a curvature which is served for focusing the illumination light on a given position of the object to be measured is provided to the reflection surface of a reflection mirror and hence, it is possible to radiate the illumination light to the position to be measured of the object to be measured in a concentrated manner whereby the illumination efficiency can be enhanced.

The illumination light further downstream to the combining unit may be set to a direction substantially parallel to the optical axis, the focusing unit is configured to include a first reflection mirror which reflects the illumination light in the direction away from the optical axis and a second reflection mirror which focuses the illumination light reflected on the reflection mirror in the optical axis direction as a set, and at least one of the first reflection mirror and the second reflection mirror includes a reflection surface having respective given curvatures with respect to two cross-sectional directions parallel to and orthogonal to the optical axis.

Due to such a constitution, by directing the radiation direction of the radiation light from the light source and the illumination light radiated from the combining unit parallel to the optical axis and by providing the reflection mirror at a position close to the object to be measured, among various sizes of the illuminator, the size in the radial direction about the optical axis can be made small. Further, the curvature which focuses the illumination light to a given position is provided to the reflection surface of either one of the first and second reflection mirrors or the reflection surfaces of both reflection mirrors and hence, it is possible to radiate the illumination light to a position to be measured of an object to be measured in a concentrated manner whereby the illumination efficiency can be enhanced.

The light source and the combining unit may be fixed to an illuminator body, the focusing unit is mounted such that the focusing unit is relatively movable with respect to an illuminator body in the direction substantially parallel to the optical axis,and the ring illuminator includes an adjusting unit which adjusts a position where the illumination light is focused by performing the relative movement of the illuminates body and the focusing unit.

Due to such a constitution, by providing the relative movement between the illuminator body to which the light source and the combining unit are fixed and the focusing unit along the optical axis, the illumination light is reflected on the reflection surface of the reflection mirror having a curved surface at positions which differ in an inclination angle and hence, the reflection angle is changed. Accordingly, it is possible to adjust the illumination angle with respect to an object to be measured and hence, the Illumination light having the proper illumination angle corresponding to the size, the shape and the surface condition of the object to be measured can be obtained whereby the accuracy of the detection of edges or the like of the object to be measured can be further enhanced.

The illumination light further downstream to the combining unit may be set to a direction substantially parallel to the optical axis, and the focusing unit is configured to include a substantially donut-shaped lens having a hole at a center portion thereof.

Due to such a constitution, with the use of the lens which is a general-purpose optical element, it is possible to manufacture the ring illuminator at a low cost. At the same time, with the use of the lens of high transmissivity and high accuracy, the transmission loss of the illumination light can be suppressed to a small amount and it is possible to accurately focus the illumination light on an illumination range whereby the illumination efficiency can be further enhanced. Further, the objective lens or the like which constitute the optical system can penetrate the ring illuminator through the hole formed in the center portion of the lens or, it is possible to make the reflection light from the object to be measured reach the objective lens or the like without being interrupted and hence, the measurement of the object to be measured can be surely performed.

### BRIEF DESCRIPTION OF THE DRAWINGS

Fig. 1 is a perspective view showing a ring illuminator according to the first embodiment of the present invention.
Fig. 2 is a cross-sectional view of the ring illuminator according to the above-mentioned embodiment.
Fig. 3 is a bottom view of the ring illuminator according to the above-mentioned embodiment.
Fig. 4 is a cross-sectional view of a ring illuminator according to the second embodiment of the present invention.
Fig. 5 is a cross-sectional view of a ring illuminator according to the third embodiment of the present invention.

### DESCRIPTION OF THE PREFERRED EMBODIMENTS

Preferred embodiments of a ring illuminator according to the present invention are explained in detail in conjunction with drawings hereinafter. In the following explanation, identical constitutional elements are given the same numerals and their explanation is omitted or simplified.

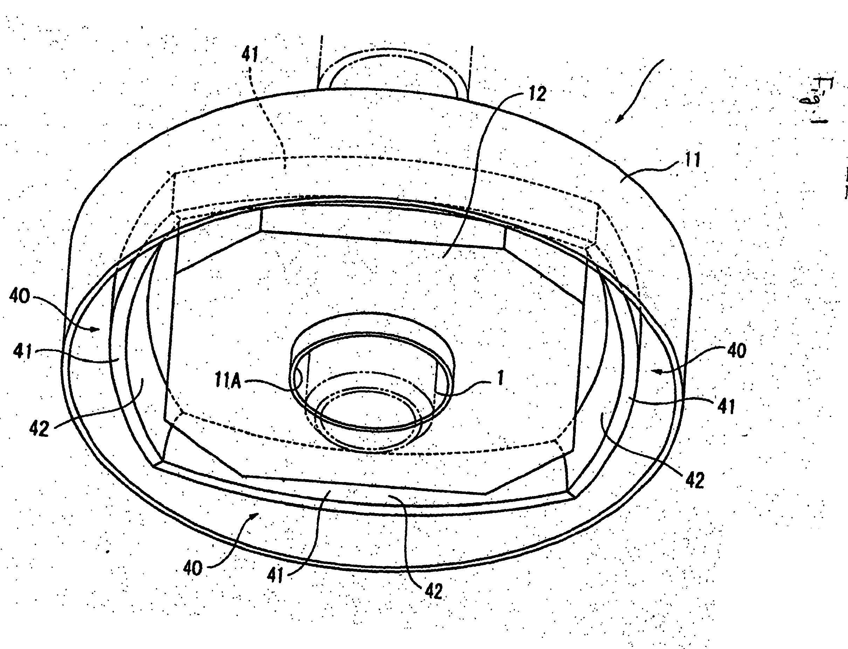

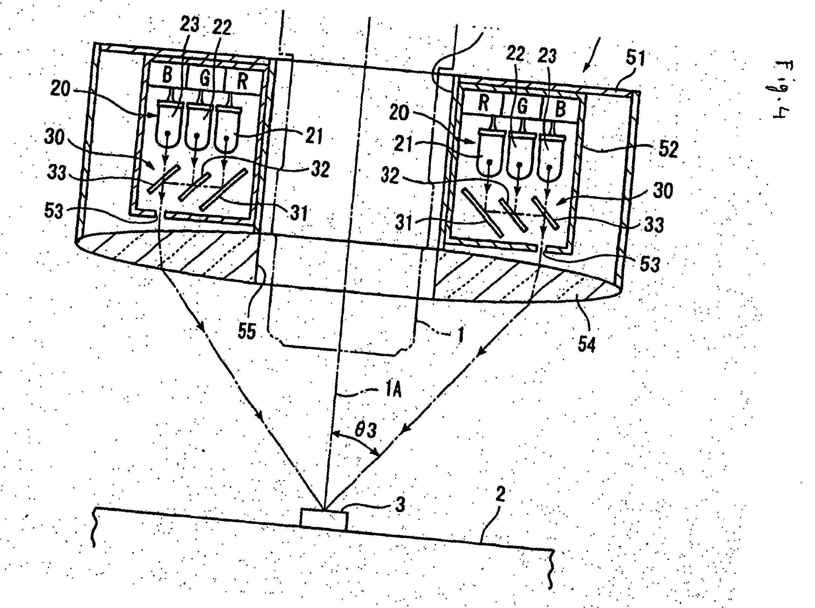

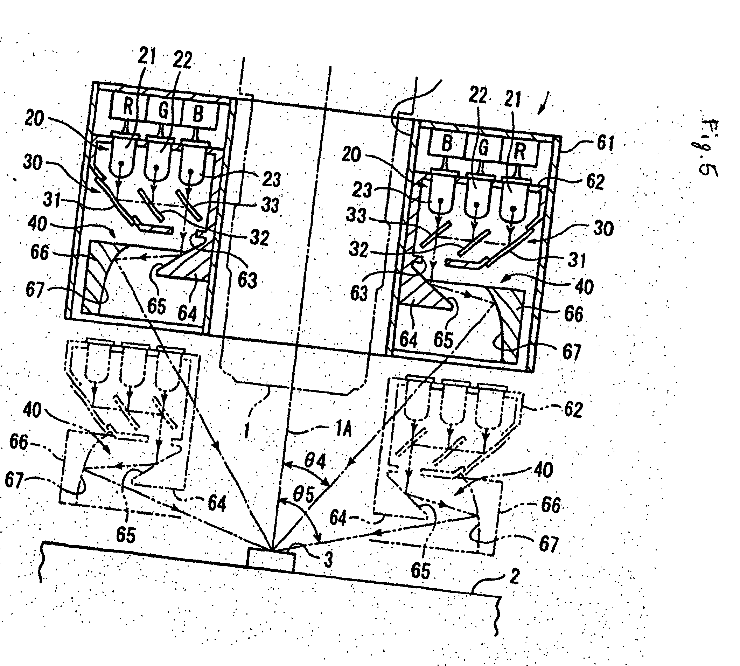

A ring illuminator 10 according to the first embodiment of the present invention is shown in Fig. 1 to Fig. 3, while ring illuminators 50, 60 according to the second embodiment and the third embodiment are respectively shown in Fig. 4 and Fig. 5.

### First Embodiment

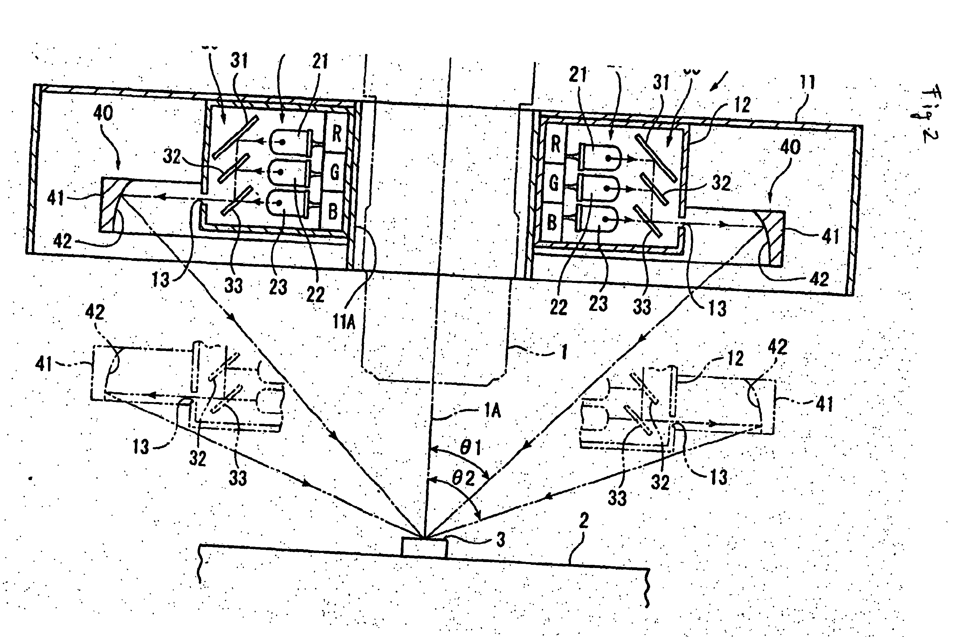

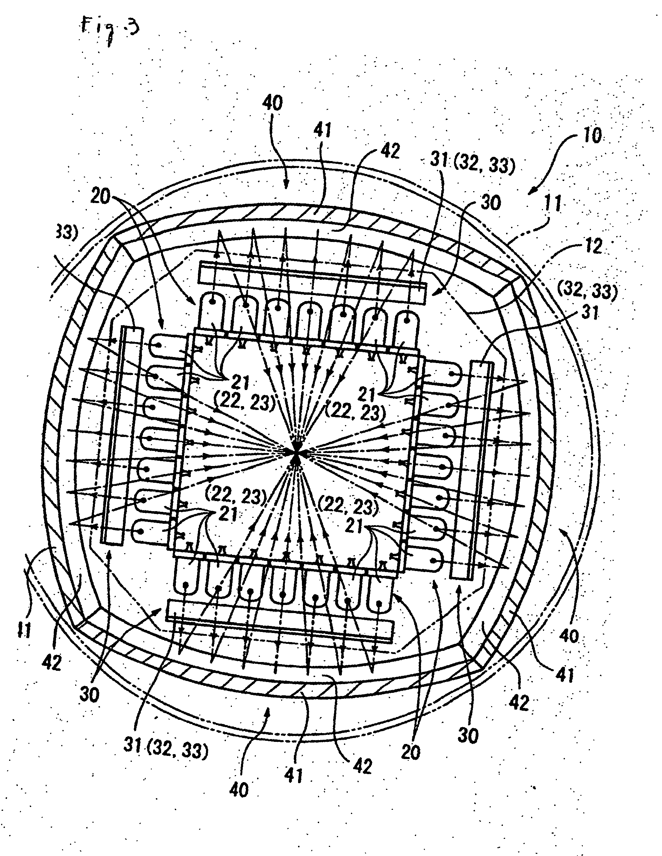

Fig. 1 is an overall perspective view of the ring illuminator 10, Fig. 2 is a cross-sectional view thereof and Fig. 3 is a bottom view thereof with a part in cross section. In Fig. 1 to Fig. 3, the ring illuminator 10 is served for illuminating an object to be measured 3 (work) which is placed on a measuring base console 2 of an image measuring device not shown in the drawing and is mounted on an objective lens 1 which constitutes a magnification optical system of the measuring device or the like. In the image measuring device, the measuring base console 2 is subjected to a drive control in two orthogonal axes directions on a horizontal plane, that is, in the left-and-right direction as well as in the front-and-back direction in Fig. 2 by means of a driving device not shown in the drawing. Further, by performing a driving control of the objective lens 1 in the vertical direction, that is, in the up-and-down direction in Fig. 2, it is possible to adjust a position and a measuring distance of the objective lens 1 suitable for a portion to be measured of the object to be measured 3.

The ring illuminator 10 includes a casing 11 which surrounds the objective lens 1 and constitutes an illuminator body having the whole thereof formed in a ring shape around an optical axis 1A of the objective lens 1 and a light source box 12 which is mounted inside the casing 11 and at a side close to the objective lens 1. In the inside of the light source box 12 , a plurality of light emitting diodes 20 which constitute a light source and a group of mirrors 30 which constitute combining means are provided. A reflection mirror 40 which constitutes focusing means is arranged around the light source box 12. Further, in Fig. 2, the position of the objective lens 1 in the vertical direction is determined such that the objective lens 1 is spaced apart from the object to be measured 3 by a given measuring distance. Here, the illumination light is radiated on the object to be measured 3 at an illumination angle θ1 corresponding to a distance (operable distance) between the ring illuminator 10 which is mounted on the objective lens 1 and the object to be measured 3.

The casing 11 is formed by processing a metal sheet or the like and is formed in a ring shape which opens downwardly in Fig. 2 while providing a lens through hole 11A which penetrates a central portion, thereof vertically in Fig. 2. The lens through hole 11A of the casing 11 has an inner diameter size which allows the objective lens 1 to pass therethrough with tolerance. Further, a mounting portion not shown in the drawing which mounts the ring illuminator 10 to the objective lens 1 in a state that the objective lens 1 passes through the casing 11 is formed on the casing 11. As such a mounting portion, for example, three screws which are supported on the casing 11 such that the screws can be moved toward or retracted from the objective lens 1 can be used.

The light source box 12 is formed by processing a metal sheet or the like in the same manner as the casing 11 and is formed of a box-like member having a substantially octagonal plan shape in which corner portions of a substantially rectangular shape are chamfered. In four faces of the light source box 12 at sides remote from the objective lens 1, slits 13 are formed along a plane substantially orthogonal to the optical axis 1A.

In the inside of the light source box 12 , light emitting diodes 20 having three types of light emitting colors (red, green, blue) are arranged for respective types. The light emitting diodes 20 of respective colors are arranged such that along the optical axis 1A, the red (R) light emitting diodes 21, the green (G) light emitting diodes 22 and the blue (B) light emitting diodes 23 are sequentially arranged from above in Fig. 2 at a given interval and are arranged in a substantially rectangular planar shape about the optical axis 1A on planes which are respectively substantially orthogonal to the optical axis 1A. With respect to the light emitting diodes 21, 22, 23 of respective colors R, G, B, seven light emitting diodes are arranged along each side of the substantially rectangular planar shape and these light emitting diodes are arranged such that they are substantially orthogonal to respective sides and have light emitting directions thereof directed in the direction away from the optical axis 1A.

With respect to the light emitting diodes 20 of respective colors, focusing lenses are mounted on distal ends thereof in the light emitting direction such that divergence angles of emitted illumination light beams assume given angles (for example, 20°) and these light emitting diodes 20 are connected to a control circuit and a power source not shown in the drawing.

Downstream of the light emitting directions of the light emitting diodes 20 of respective colors, mirror groups 30 each of which is constituted of three types of mirrors 31, 32, 33 are arranged, wherein respective mirrors 31. 32, 33 are formed in a substantially rectangular planar shape and the longitudinal directions of these mirrors are arranged substantially parallel to rows of light emitting diodes 21, 22, 23 of respective colors R, G, B, and a longitudinal length of these mirrors is set substantially equal to lengths of respective sides of the light emitting diodes 20 which are arranged in a substantially planar rectangular shape. Further, the mirrors 31, 32, 33 are arranged with an inclination of substantially 45° with respect to the optical axis 1A in the cross-sectional direction along the optical axis 1A.

The mirrors 31 are reflection mirrors and are arranged to reflect the light radiated from the red light emitting diodes 21 toward the object to be measured 3 along the optical axis 1A.

The mirrors 32, 33 are respectively dichroic mirrors and have either characteristics to reflect light beams having wavelengths shorter than a given wavelength and to allow light beams having wavelengths longer than the given wavelength to pass therethrough or characteristics to allow light beams haying wavelengths shorter than a given wavelength to pass therethrough and to reflect light beams having wavelengths longer than the given wavelength. That is, the mirrors 32, 33 are dichroic mirrors in which the number of transition of characteristics from reflection to transmission or transmission to reflection corresponding to the wavelength of the light is only once at the given wavelength.

The mirror 32 is arranged such that the mirror 32 allows the red light reflected by the mirror 31 to pass therethrough and to reflect the green radiation light which is radiated from the green light emitting diode 22 and has the wavelength shorter than that of the red light in the direction toward the object to be measured 3 along the optical axis 1A.

The mirror 33 is arranged such that the mirror 33 reflects the red light which passes through the mirror 32 and the green light which is reflected by the mirror 32 and allows the blue radiation light which is radiated from the blue light emitting diode 23 and has the wavelength shorter than the wavelengths of the red and green light beams to pass therethrough.

Downstream of an advancing direction (that is, downstream of the direction away from the optical axis 1A on the plane which is substantially orthogonal to the optical axis 1A) of the illumination light which is formed by combining the red and green lights reflected by the mirror 33 and the blue light which passes through the mirror 33, a reflection mirror 40 is arranged. The reflection mirror 40 is provided between respective planar rectangular sides of the light source box 12 and the casing 11 and the relative position of the reflection mirror 40 with respect to the light source box 12 is movable along the optical axis 1A by a driving device not shown in the drawing which is mounted in the inside of the casing 11.

The reflection mirror 40 is constituted of a metal made reflection mirror body 41, wherein a side surface at a side which faces the optical axis 1A in an opposed manner is provided with a mirror finish thus forming a reflection surface 42 which reflects the light. A convex curvature is formed on the reflection surface 42 in the direction away from the optical axis 1A with respect to the cross-sectional direction along the optical axis 1A such that the illumination light is reflected toward the object to be measured 3. Further, also with respect to the planar direction which is substantially orthogonal to the optical axis 1A, a convex curvature having a radius which is substantially twice as large as the distance from the optical axis 1A to the reflection mirror 40 is formed on the reflection surface 42 in the direction away from the optical axis 1A such that the illumination light which advances in the direction substantially parallel to the light emitting direction of the light emitting diodes 20 arranged in the substantially rectangular shape and away from the optical axis 1A is reflected toward the optical axis 1A.

Next, the manner of operation of the ring illuminator 10 according to this embodiment is explained.

First of all , the position of the objective lens 1 with respect to the set measuring distance is adjusted corresponding to the size, the shape and the measuring range of the object to be measured 3 and the ring illuminator 10 is mounted on the objective lens 1.

To adjust the hue of the illumination light in response to the hue of the object to be measured 3, out of the light emitting diodes 21, 22, 23 of respective colors R, G, B which are arranged as the light source, the light emitting diodes 20 of proper colors are selected and the lighting and extinguishing control of these light emitting diodes 20 is performed. That is, when all of the light emitting diodes 21, 22, 23 of respective colors R, G, B are turned on, the illumination light combined by the mirror group 30 becomes a white light, while when only the light emitting diodes of only one color are turned on, the illumination light of such a color is obtained. Further, when the light emitting diodes 20 of any two colors are selected out of the light emitting diodes 21, 22, 23 of respective colors R, G, B and are turned on, the illumination light which is combined by two selected colors is obtained. Further, by partially turning on or off any one or two of selected light emitting diodes 21, 22, 23, it is possible to combine the illumination light of an intermediate color.

Further, the ring illuminator 10 includes, to provide a proper illumination angle depending on the shape of a surface to be measured of the object to be measured 3, adjusting means which adjusts the illumination angle. For example, when edges of irregularities of the object to be measured 3 having many irregularities on a surface thereof is to be detected, the adjusting means can set the illumination angle to a large illumination angle θ2. That is, the reflection mirror 40 which is mounted in such a manner that the reflection mirror 40 is movable relative to the casing 11 which constitutes the illumination body and the light source box 12 is, as indicated by a chain double-dashed line in Fig. 2, moved in the direction away from the object to be measured 3 along the optical axis 1A and, at the same time, the mounting position of the ring illuminator 10 on the objective lens 1 is set to a position close to the object to be measured 3. Because of such an arrangement, the illumination light which is combined by the mirror group 30 of the light source box 12 and passes through the slits 13 of the light source box 12 is reflected on a position of the reflection surface 42 of the reflection mirror 40 which is close to the object to be measured 3, that is, on a position of the reflection surface 42 having a curvature where the inclination angle with respect to the optical axis 1A is small. Accordingly, the reflected illumination light is radiated to the object to be measured 3 with the large illumination angle θ2 with respect to the optical axis 1A.

Because of such constitutions, the following advantageous effects can be obtained according to this embodiment.
(1) The light beams which radiate from the light emitting diodes 21, 22, 23 of the respective colors R, G, B are combined to the illumination light of the given hue by the mirror group 30 including the dichroic mirrors 32, 33 which are arranged in front of the light emitting diodes 21, 22, 23, and the combined illumination light is radiated to the object to be measured 3 and hence, it is possible to radiate the illumination light having the hue corresponding to the surface color of the object to be measured 3. That is, the contrast of the image of the object to be measured 3 obtained through the objective lens 1 is emphasized and hence, it is possible to sufficiently enhance the accuracy of detection of edges or the like of the object be measured 3.
(2) By combining the radiated light beams which are radiated from the light emitting diodes 21, 22, 23 of the respective colors R,G, B using the mirror group 30 which constitutes the combining means, the illumination light which is preliminarily combined into the given hue by the mirror group 30 is radiated to the object to be measured 3. Accordingly, compared to a case in which the light beams of respective colors are combined on the surface of the object to be measured 3, it is possible to radiate the illumination light having uniform hue free from irregularities so that the detection accuracy can be further enhanced.
(3) By concentrating the illumination light on the object to be measured 3 by the reflection mirror 40, the illumination efficiency is enhanced so that the mounting number of the light emitting diodes 20 can be reduced whereby, the illuminator can be miniaturized.
(4) Compared to the related art, the mounting number of the light emitting diodes 20 can be reduced and hence, the adverse influence which heat generated from the light emitting diodes 20 affects the image measuring device or the like can be reduced and, at the same time, the power consumption and the power cost can be reduced.
(5) With the use of the light emitting diodes 20 as the light source, it is possible to provide the light source having the rapid responsivity and the long lifetime which are features of the light emitting diodes. Further, with the provision of the light emitting diodes 21, 22, 23 of respective colors R, G, B, the white light which constitutes the illumination light of basic color can be generated and, at the same time, by properly changing the combining ratio of respective colors RGB, it is possible to generate illumination light beams having various hue. Accordingly, it is possible to radiate the illumination light of optimum hue to the object to be measured 3 corresponding to the object to be measured 3 having various surface colors.
(6) With the use of dichroic mirrors 32, 33 which constitute the mirror group 30 as the combining means, it is possible to combine the illumination light of the given hue. Further, by forming the dichroic mirrors 32, 33 in a substantially rectangular planar simple shape, it is possible to form the mirror group 30 in an inexpensive manner. Still further, compared to a case in which dichroic mirrors having curved surfaces are used, the loci of the reflection and transmission light beams can be easily calculate d and hence, it is possible to perform the arrangement and the mounting of the dichroic mirrors 32, 33 easily and, at the same time, it is possible to accurately combine the illumination light.
(7) The mirrors 32, 33 are dichroic, mirrors in which the number of transition of characteristics from reflection to transmission or from transmission to reflection corresponding to the wavelength of the light is only once at the given wavelength. Accordingly, compared to the dichroic mirrors in which the transition of characteristics from reflection to transmission or from transmission to reflection corresponding to the wavelength of the light is performed two or more times at a plurality of wavelengths, the number of layers of mirror surface vapor deposited films can be reduced and hence, the film forming processing can be facilitated and, at the same time, the reflection efficiency and the transmission efficiency of the dichroic mirror can be enhanced.
(8) By forming the illuminator such that the light emitting direction of the light emitting diodes 20 is directed in the direction substantially orthogonal to the optical axis 1A and away from the optical axis 1A and the mirror group 30 and the reflection mirror 40 are arranged downstream of the light emitting direction, put of sizes of the illuminator, the size in the direction parallel to the optical axis 1A can be decreased and hence, the degree of freedom of the mounting position along the optical axis 1A is enhanced at the time of mounting the illuminator to the objective lens 1, whereby setting of the operable distance and the illumination angle can be accurately performed and the detection accuracy of the image of the object to be measured 3 can be enhanced.
(9) The reflection mirror 40 is provided at a position further from the optical axis 1A than the light source box 12 and the illumination light is reflected in the optical axis 1A direction from the reflection mirror 40 and hence, the illumination angle θ1 of the illumination light radiated to the object to be measured 3 is increased whereby shadows of edge portions of the object to be measured 3 having a stereoscopic shape can be clearly detected. Since the curvature for focusing the illumination light to the given position is provided to the reflection surface 42 of the reflection mirror 40, it is possible to radiate the illumination light to the position to be measured of the object to be measured 3 in a concentrated manner whereby the illumination efficiency is enhanced.
(10) The convex curvature is provided to the reflection surface 42 of the reflection mirror 40 in the direction away from the optical axis 1A with respect to two directions consisting of the cross-sectional direction along the optical axis 1A and the planar direction which is substantially orthogonal to the optical axis 1A. Accordingly, it is possible to radiate the illumination light to the position to be measured of the object to be measured 3 in a concentrated manner so that the illumination efficiency can be enhanced.
(11) By allowing the reflection mirror 40 to perform the relative movement thereof along the optical axis 1A with respect to the casing 11 and the light source box 12, the illumination light is reflected at a position having a different inclination angle on the reflection surface 42 of the reflection mirror 40 having the curved surface, the reflection angle can be changed and the illumination angle with respect to the object to be measured 3 can be adjusted. Accordingly, it is possible to obtain the illumination light having proper illumination angles θ1, θ2 corresponding to the size, the shape and the surface condition of the object to be measured 3 whereby it is possible to achieve the further enhancement of the accuracy for detecting the edges or the like of the object to be measured 3.

### Second Embodiment

Next, the second embodiment of the present invention is explained. Fig. 4 is a cross-sectional view of a ring illuminator 50 according to the second embodiment. The constitution of the ring illuminator 50 which makes this embodiment different from the above-mentioned first embodiment lies in the arrangement direction of the light emitting diodes 20 as the light source and the use of a lens 54 in place of the reflection mirror 40 as the focusing means. Other constitutions are substantially equal to those of the first embodiment.

In Fig. 4, the light emitting diodes 21, 22 23 of respective colors R, G, B are arranged in a ring shape on planes which are respectively substantially orthogonal to the optical axis 1A, wherein the light emitting diodes 21, 22, 23 are arranged in substantially rectangular shapes which differ in distance from the optical axis 1A for respective colors as well as in a spaced-apart manner from each other at a given interval. That is, from the side closest to the optical axis 1A, the light emitting diodes 21 of red color (R), the light emitting diodes 22 of green color (G) and the light emitting diodes 23 of blue color (B) are sequentially arranged. Respective light emitting diodes 20 have the light emitting directions thereof arranged substantially parallel to the optical axis 1A such that the light emitting directions are directed toward the object to be measured 3.

Downstream of the light emitting directions of the light emitting diodes 20, mirror groups 30 similar to the mirror groups 30 of, the above-mentioned first embodiment are arranged. Because of these mirror groups 30, the light beams radiated from the light emitting diodes 21, 22, 23 of the respective colors R, G, B are reflected on the mirror group 30 or are allowed to pass through the mirror groups 30 in the direction away from the optical axis 1A and the illumination light of a given hue is combined. The combined illumination light is substantially parallel to the optical axis 1A and advances toward the object to be measured 3.

A light source box 52 which houses the light emitting diodes 20 and the mirror group 30 therein is provided with slits 53 which allow the illumination light to pass therethrough in a bottom wall thereof which faces the object to be measured 3. The slits 53 are formed in the bottom wall at a side away from the objective lens 1.

The casing 51 on which the light source box 52 is mounted is formed in a downwardly opened ring shape as shown in Fig. 4 and is provided with a lens through hole 51A which vertically penetrates a center portion thereof.

The lens 54 which functions as the focusing means is mounted on the opening side of the casing 51. The lens 54 is made of transparent glass and is processed in a substantially donut shape. Here, the lens 54 has a center thereof substantially aligned with the optical axis 1A, gradually decreases a thickness toward an outer periphery thereof, and is provided with a hole 55 at a substantially center thereof Further, the lens 54 has a function of deflecting the illumination light which passes through the slits 53 of the light source box 52 and a. function of focusing the illumination light to the object to be measured 3 at an illumination angle θ3 corresponding to a focal length thereof.

Because of such constitutions, according to this embodiment, it is possible to obtain following advantageous effects in addition to the previously-mentioned advantageous effects (1), (2), (4) to (7).
(12) By forming the illuminator such that the light emitting directions of the light emitting diodes 20 are directed in the direction substantially parallel to the optical axis 1A and the mirror group 30 and the lens 54 are arranged downstream of the light emitting directions, with respect to sizes of the illuminators, the size in the radial direction about the optical axis 1A can be made small and hence, in performing the measurement by mounting the illuminator to the objective lens 1, the illuminator does not obstruct the measurement and thus the measuring operation can be speedily performed.
(13) With the use of the lens 54 which is a general-purpose optical element, it is possible to manufacture the ring illuminator 50 at a low cost. At the same time, with the use of the lens 54 of high transmissivity and high accuracy, the transmission loss of the illumination light can be suppressed to a small amount and it is possible to accurately focus the illumination light on an illumination range whereby the illumination efficiency can be further enhanced.
(14) The objective lens 1 can penetrate the ring illuminator 50 through the hole 55 formed in the center portion of the lens 54 and, at the same time, it is possible to make the reflection light from the object to be measured 3 reach the objective lens 1 without being interrupted and hence, the measurement of the object to be measured 3 can be surely performed.

### Third Embodiment

Next, the third embodiment of the present invention is explained. Fig. 5 is a cross-sectional view of a ring illuminator 60 according to the third embodiment. The constitution of the ring illuminator 60 which makes this embodiment different from the above-mentioned first embodiment lies in the arrangement direction of the light emitting diodes 20 as the light source and the constitution of the reflection mirror 40 as the focusing means. Other constitutions are substantially equal to those of the first embodiment.

In Fig. 5, the casing 61 on which a light source box 62 is mounted is formed in a downwardly opened ring shape as shown in Fig. 5 and is provided with a lens through hole 61A which vertically penetrates a center portion thereof in Fig. 5.

The light source box 62 which houses the light emitting diodes 20 and the mirror groups 30 is provided with slits 63 which allow the illumination light to pass therethrough in a bottom wall thereof which faces the object to be measured 3. The slits 63 are formed in the bottom wall at a side close to the objective lens 1.

In Fig. 5 , the light emitting diodes 21, 22, 23 of respective colors R, G, B are arranged in a ring shape on a plane which is substantially orthogonal to the optical axis 1A, wherein the light emitting diodes 21-01 22, 23 are arranged in annular shapes which differ in distance from the optical axis 1A for respective colors as well as in a spaced-apart manner from each other at a given interval. That is, from the side closest to the optical axis 1A, the light emitting diodes 23 of blue color (B) the light emitting diodes 22 of green color (G) and the light emitting diodes 21 of red color (R) are sequentially arranged. Respective light emitting diodes 20 have the light emitting directions thereof arranged substantially parallel to the optical axis 1A such that the light emitting directions are directed toward the object to be measured 3.

Downstream of the light emitting directions of the light emitting 20, mirror groups 30 similar to the mirror groups 30 of the above-mentioned first embodiment are arranged. Because of these mirror groups 30, the light beams radiated from the light emitting diodes 21, 22, 23 of respective colors R, G, B are reflected on the mirror groups 30 or are allowed to pass through the mirror group 30 in the direction toward the optical axis 1A and the illumination light of a given hue is combined. The combined illumination light is substantially parallel to the optical axis 1A and advances through the slits 63 of the light source box 62.

In the inside of the casing 61 , a reflection mirror 40 which constitutes focusing, means is arranged at a side of the light source box 62 which faces the object to be measured 3.

The reflection mirror 40 is constituted by combining two types of reflection mirrors consisting of a first reflection mirror 64 and a second reflection mirror 66. The first reflection mirror 64 includes a first reflection surface 65 formed in a planar shape and this first reflection surface 65 makes the illumination light passing through the slits 63 reflect in the direction away from the optical axis 1A. Further, the first reflection mirror 64 is integrally fixed to the light source box 62.

The second reflection mirror 66 includes a second reflection surface 67 which is formed in a curved shape having a convex curvature in the direction away from the optical axis 1A with respect to two directions consisting of the cross-sectional direction along the optical axis 1A and the planar direction substantially orthogonal to the optical axis 1A such that the illumination light which is reflected by the first reflection surface 65 is reflected and focused in the direction toward the object to be measured 3 with an illumination angle θ4. Further, the relative position of the second reflection mirror 66 with respect to the first reflection mirror 64 is movable along the optical axis 1A by a driving device not shown in the drawing which is mounted inside the casing 61.

To adjust the illumination angle θ4 to a large illumination angle θ5 corresponding to the object to be measured 3 in the ring illuminator 60, the second reflection mirror 66 which is mounted with relative movement with respect to the first reflection mirror 64 is moved toward the light source box 62 side along the optical axis 1A as indicated by a chain double-dashed line shown in 5 and, at the same time, the mounting position of the ring illuminator 60 to the objective lens 1 is set at a position close to the object to be measured 3. Because of such a constitution, the illumination light which is reflected on the first reflection surface 65 is reflected on the second reflection surface 67 of the second reflection mirror 66 at a position close to the object to be measured 3 , that is, on the second reflection surface 67 having the curvature at a position where an inclination angle with respect to the optical axis 1A is small. Accordingly, the reflected illumination light is radiated to the object to be measured 3 with the large illumination angle θ5 with respect to the optical axis 1A.

In this manner, according to this embodiment, following advantageous effects can be obtained in addition to the above-mentioned advantageous effects described in (1) to (7).
(15) By forming the illuminator such that the light emitting directions of the light emitting diodes 20 are directed in the direction substantially parallel to the optical axis 1A and the mirror groups 30 and the first reflection mirror 64 and the second reflection mirror 66 are arranged downstream of the light emitting directions, with respect to sizes of the illuminator, the size in the radial direction about the optical axis 1A can be made small and hence, in performing the measurement by mounting the illuminator to the objective lens 1, the illuminator does not obstruct the measurement so that the measuring operation can be speedily performed.
(16) The convex curvature is provided to the reflection surface 67 of the second reflection mirror 66 in the direction away from the optical axis 1A with respect to two directions consisting of the cross-sectional direction along the optical axis 1A and the planar direction substantially orthogonal to the optical axis 1A and hence, it is possible to radiate the illumination light to the position to be measured of the object to be measured 3 in a concentrated manner whereby the illumination efficiency can be further enhanced.
(17) By enabling the second reflection mirror 66 to perform the relative movement with respect to the first reflection mirror 64 in the direction along the optical axis 1A, the illumination light is reflected at positions which differ in the inclination angle on the second reflection surface 67 having the curved surface of the second reflection mirror 66 so that the reflection angle is changed whereby the illumination angle with respect to the object to be measured 3 can be adjusted. Accordingly, the illumination light having the proper illumination angle θ4, θ5 corresponding to the size, the shape and the surface condition of the object to be measured 3 is obtained so that the accuracy of detection of edges or the like of the object to be measured 3 can be further enhanced.

The present invention is not limited to the above-mentioned respective embodiments and modifications and improvements which are made within a range in which the object of the present invention can be achieved are included in the present invention.

For example, although the explanation has been made with respect to the ring illuminator served for the image measuring device in the above-mentioned respective embodiments, the ring illuminator can be served for a measuring microscope, a tool microscope, a projector, a three-dimensional image measuring apparatus or the like.

Further, although the ring illuminator is mounted on the objective lens 1 in the above-mentioned respective embodiments, the present Invention is not limited to such a manner of mounting. That is, the ring illuminator may be mounted on the body of the measuring device or the like or the measuring base console. Further, a member which supports the ring measuring device is provided apart from these measuring devices and the ring illuminator may be mounted on the member. Further, the mounting method is not limited to the method which uses three screws supported such that the screws are movable toward or away from the objective lens 1 and any method which can properly set the operable distance between the ring illuminator and the object to be measured is applicable. Further, the mounting method may adopt means which is movable along the optical axis of the optical system.

Further, the light emitting diodes 20 are arranged in a substantially rectangular shape in plan in the above-mentioned respective embodiments. However, the present invention is not limited to such an arrangement and the light emitting diodes 20 may be arranged in a substantially circular shape in plan or in a substantially triangular shape in plan, in a pentagonal shape in plan or in a polygonal shape having many angles in plan.

Further, the arrangement of the light emitting diodes 21, 22, 23 of respective colors R, G, B is not limited to the sequence indicated in the above-mentioned respective embodiments and the different arrangement may be adopted. In this case, it is possible to use dichroic mirrors having reflection or transmission characteristics corresponding to the arrangement of light emitting diodes 21, 22, 23 of respective colors R, G, B. Further, it is also possible to use dichroic mirrors which perform the transition of reflection or transmission characteristics at a plurality of wavelengths two or more times.

Further, in addition to the light emitting diodes 21, 22, 23 of respective colors R, G, B, a white light emitting diode may be used. Because of such a constitution, it is possible to perform the illumination by adjusting the hue of the illumination light without lowering the brightness.

Further, although the casing and the light source box are formed by processing the metal sheet material in the above-mentioned respective embodiments, the material is not limited to the metal sheet material and may be made of synthetic resin. Further, the reflection mirror is made of metal and is provided with a mirror finish on the reflection surface thereof. However, the reflection mirror is not limited to such a constitution. That is, the reflection mirror may be made of glass or synthetic resin or only the reflection surface may be made of glass or metal, or plating or the like may be applied to the reflection surface.

## Claims

1. A ring illuminator comprising:
a light source formed of a plurality of light emitting elements (20) arranged around the optical axis (1A) of an optical system (1), the light emitting elements consisting of at least two types of light emitting elements (21, 22, 23) each type of light emitting element having a different colour, and out of the light emitting elements (20) forming the light source, each group of light emitting elements (21, 22, 23) of the same type being arranged in a ring around the optical axis (1A) on a same plane substantially orthogonal to said optical axis; and
focusing means (40, 54) being provided downstream of said light source for focusing light at a given position on the optical axis,
**characterized by further comprising**
combining means (30) constituted by a mirror means provided downstream the light emitting elements (20) for combining light beams from the light emitting elements (20) and having light emitting colours different from each other, to generate a single illumination beam having a given hue; and
said focusing means (40, 54) being provided downstream of said combining means (30) to focus said combined illumination of a given hue at said given position along the optical axis.

2. A ring illuminator according to claim 1, wherein the light emitting element groups (21, 22, 23) each group having a different colour and arranged in a ring such that each group is arranged in a spaced apart manner from each other at a given distance along the optical axis direction, and said light emitting element groups (21, 22, 23) have the light emitting directions thereof arranged in the direction away from the optical axis (1A).

3. A ring illuminator according to claim 1, wherein the light emitting element groups (21, 22, 23) each having different light emitting colours and arranged in a ring such that each group is arranged along circles which differ in distance from the optical axis on substantially same planes which are substantially orthogonal to the optical axis, and the light emitting direction is arranged in the direction substantially parallel to the optical axis (1A).

4. A ring illuminator according to claim 1, wherein the plurality of light emitting elements (20) comprise three types of light emitting diodes (21, 22, 23) having respective light emitting colours of red (R), green (G), blue (B).

5. A ring illuminator according to claim 1. wherein the combining means (30) is configured to include dichroic mirrors (32, 33) formed in a planar shape.

6. A ring illuminator according to claim 5, wherein the dichroic mirrors (32, 33) have either characteristics which reflect light having a wavelength shorter than a given wavelength and allow light having a wavelength longer than the given wavelength to pass therethrough or characteristics which allow light having a wavelength shorter than a given wavelength to pass therethrough and reflect light having a wavelength longer than the given wavelength.

7. A ring illuminator according to claim 1, wherein the combined illumination light further downstream to the combining means (30) is set to a direction on a plane substantially orthogonal to the optical axis (1A) and directs away from the optical axis, whereby the focusing means is configured to include a reflection mirror (40) which focuses the illumination light in the optical axis direction, and the reflection mirror includes a reflection surface (42) having respective given curvatures with respect to two cross-sectional directions parallel to and orthogonal to the optical axis.

8. A ring illuminator according to claim 1, wherein the combined illumination light further downstream to the combining means (30) is set to a direction substantially parallel to the optical axis (1A), whereby the focusing means is configured to include a first reflection mirror (64) which reflects the illumination light in the direction away from the optical axis (1A) and a second reflection mirror (66) which focuses the illumination light reflected on the reflection mirror in the optical axis direction as a set, and
at least one of the first reflection mirror (64) and the second reflection mirror (66) includes a reflection surface having respective given curvatures with respect to two cross-sectional directions parallel to and orthogonal to the optical axis.

9. A ring illuminator according to claim 1, wherein the light source (20) and the combining means (30) are fixed to an illuminator body (12), the focusing means (40) is mounted such that the focusing means is relatively movable with respect to said illuminator body (12) in the direction substantially parallel to the optical axis (1A), and
the ring illuminator includes adjusting means which adjusts a position where the illumination light is focused by performing the relative movement of the illuminator body (12) and the focusing means (40).

10. A ring illuminator according to claim 1, wherein the combined illumination light further downstream to the combining means (30), is set to a direction substantially parallel to the optical axis (1A), and the focusing means is configured to include a substantially donut-shaped lens having a hole at a centre portion thereof.

## Patentansprüche

1. Ring-Illuminator, der umfasst:
eine Lichtquelle, die aus einer Vielzahl lichtemittierender Elemente (20) besteht, die um die optische Achse (1A) eines optischen Systems (8) herum angeordnet sind, wobei die lichtemittierenden Elemente aus wenigstens zwei Typen lichtemittierender Elemente (21, 22, 23) bestehen, jeder Typ lichtemittierendes Element eine andere Farbe hat und von den lichtemittierenden Elementen (20), die die Lichtquelle bilden, jede Gruppe lichtemittierender Elemente (21, 22, 23) vom selben Typ in einem Ring um die optische Achse (1A) herum in der gleichen Ebene im Wesentlichen senkrecht zu der optischen Achse angeordnet ist; und
Fokussiereinrichtungen (40, 54), die hinter der Lichtquelle angeordnet sind, um Licht auf eine bestimmte Position auf der optischen Achse zu fokussieren,
**dadurch gekennzeichnet, dass** er des Weiteren umfasst:
Kombiniereinrichtungen, die durch Spiegeleinrichtungen gebildet werden, die hinter den lichtemittierenden Elementen (20) vorhanden sind, um Lichtstrahlen von den lichtemittierenden Elementen (20) zu kombinieren, und die Lichtemissionsfarben hat, die sich voneinander unterscheiden, um einen einzelnen Beleuchtungsstrahl mit einem bestimmten Farbton zu erzeugen; und
die Fokussiereinrichtungen (40, 54) hinter den Kombiniereinrichtungen (30) vorhanden sind, um die kombinierte Beleuchtung eines bestimmten Farbtons auf die bestimmte Position entlang der optischen Achse zu fokussieren.

2. Ring-Illuminator nach Anspruch 1, wobei von den Gruppen lichtemittierender Elemente (21, 22, 23) jede Gruppe eine andere Farbe hat und in einem Ring so angeordnet ist, dass alle Gruppen um eine bestimmte Strecke entlang der Richtung der optischen Achse voneinander beabstandet angeordnet sind, und die Lichtemissionsrichtungen der Gruppen lichtemittierender Elemente (21, 22, 23) in der Richtung von der optischen Achse (1A) weg angeordnet sind.

3. Ring-Illuminator nach Anspruch 1, wobei die Gruppen lichtemittierender Elemente (21, 22, 23) jeweils verschiedene Lichtemissionsfarben haben und so in einem Ring angeordnet sind, dass jede Gruppe auf Kreisen, deren Anstand zu der optischen Achse sich unterscheidet, in im Wesentlichen gleichen Ebenen, die im Wesentlichen senkrecht zu der optischen Achse sind, angeordnet ist, und die Lichtemissionsrichtung der Richtung im Wesentlichen parallel zu der optischen Achse (1A) angeordnet ist.

4. Ring-Illuminator nach Anspruch 1, wobei die Vielzahl lichtemittierender Elemente (20) drei Typen von Leuchtdioden (21, 22, 23) umfassen, die Lichtemissionsfarben Rot (R), Grün (G) bzw. Blau (B) haben.

5. Ring-Illuminator nach Anspruch 1, wobei die Kombiniereinrichtung so gestaltet ist, dass sie dichroitische Spiegel (32, 33) enthält, die in einer planen Form ausgebildet sind.

6. Ring-Illuminator nach Anspruch 5, wobei die dichroitischen Spiegel (32, 33) entweder solche Eigenschaften haben, dass sie Licht mit einer Wellenlänge, die kürzer ist als eine bestimmte Wellenlänge, reflektieren und Licht mit einer Wellenlänge, die länger ist als die bestimmte Wellenlänge, durchlassen, oder solche Eigenschaften haben, dass sie Licht mit einer Wellentänge, die kürzer ist als eine bestimmte Wellenlänge, durchlassen und Licht mit einer Wellenlänge, die länger ist als die bestimmte Wellenlänge, reflektieren.

7. Ring-Illuminator nach Anspruch 1, wobei das kombinierte Beleuchtungslicht weiter hinter der Kombiniereinrichtung (30) auf eine Richtung in einer Ebene im Wesentlichen senkrecht zu der optischen Achse (1A) eingestellt ist und von der optischen Achse weggerichtet ist, die Fokussiereinrichtung so gestaltet ist, dass sie einen Reflektionsspiegel (40) enthält, der das Beleuchtungslicht in Richtung der optischen Achse fokussiert, und der Reflektionsspiegel eine Reflektionsfläche (42) enthält, die entsprechende bestimmte Krümmungen in Bezug auf zwei Querschnittsrichtungen parallel zu und senkrecht zu der optischen Achse aufweist.

8. Ring-Illuminator nach Anspruch 1, wobei das kombinierte Beleuchtungslicht weiter hinter der Kombiniereinrichtung (30) auf eine Richtung im Wesentlichen parallel zu der optischen Achse (1A) eingestellt ist, die Fokussiereinrichtung so gestaltet ist, dass sie einen ersten Reflektionsspiegel (64), der das Beleuchtungslicht in der Richtung von der optischen Achse (1A) weg reflektiert, und einen zweiten Reflektionsspiegel (66) enthält, der das an dem Reflektionsspiegel reflektierte Beleuchtungslicht als Satz in Richtung der optischen Achse reflektiert, und
wenigstens der erste Reflektionsspiegel (64) oder der zweite Reflektionsspiegel (66) eine Reflektionsfläche enthält, die entsprechende bestimmte Krümmungen in Bezug auf zwei Querschnittsrichtungen parallel zu und senkrecht zu der optischen Achse aufweist.

9. Ring-Illuminator nach Anspruch 1, wobei die Lichtquelle (20) und die Kombiniereinrichtung (30) an einem Illuminator-Körper (12) befestigt sind und die Fokussiereinrichtung (40) so angebracht ist, dass die Fokussiereinrichtung relativ in Bezug auf den Illuminator-Körper (12) in der Richtung im Wesentlichen parallel zu der optischen Achse (1A) bewegt werden kann, und
der Ring-Illuminator eine Einstelleinrichtung enthält, die eine Position einstellt, auf die das Beleuchtungslicht fokussiert wird, indem die relative Bewegung des Illuminator-Körpers (12) und der Fokussiereinrichtung (40) durchgeführt wird.

10. Ring-Illuminator nach Anspruch 1, wobei das kombinierte Beleuchtungslicht weiter hinter der Kombiniereinrichtung (30) auf eine Richtung im Wesentlichen parallel zu der optischen Achse (1A) eingestellt ist und die Fokussiereinrichtung so gestaltet ist, dass sie eine im Wesentlichen ringförmige Linse enthält, die ein Loch in ihrem Mittelabschnitt auiweist.

## Revendications

1. Illuminateur annulaire comportant :
une source lumineuse formée d'une pluralité d'éléments électroluminescents (20) agencés autour de l'axe optique (1A) d'un système optique (1), les éléments électroluminescents étant constitués d'au moins deux types d'éléments électroluminescents (21, 22, 23), chaque type d'élément électroluminescent ayant une couleur différente et parmi les éléments électroluminescents (20) formant la source lumineuse, chaque groupe d'éléments électroluminescents (21 22, 23) du même type étant agencé en anneau autour de l'axe optique (1A) sur un même plan sensiblement orthogonal audit axe optique; et
des moyens de focalisation (40, 54) étant prévus en aval de ladite source lumineuse pour focaliser la lumière sur une position donnée sur l'axe optique,
**caractérisé en ce qu'**il comporte en outre
des moyens de combinaison constitués de moyens de miroir prévus en aval des éléments électroluminescents (20) pour combiner les faisceaux de lumière provenant des éléments électroluminescents (20) et ayant des couleurs d'émission de lumière différentes les uns des autres, pour produire un seul faisceau d'éclairage ayant une tonalité donnée; et
lesdits moyens de focalisation (40, 54) étant prévus en aval desdits moyens de combinaison (30) pour focaliser ledit éclairage combiné d'une tonalité donnée sur ladite position donnée le long de l'axe optique.

2. Illuminateur annulaire selon la revendication 1, dans lequel les groupes d'éléments électroluminescents (21, 22, 23), chaque groupe ayant une couleur différente et agencé en anneau de telle sorte que chaque groupe est agencé d'une manière espacée l'un de l'autre d'une distance donnée le long de la direction de l'axe optique, et lesdits groupes d'éléments électroluminescents (21, 22, 23) ont leurs directions d'émission de lumière agencées à l'opposé de l'axe optique (1A).

3. Illuminateur annulaire selon la revendication 1, dans lequel les groupes d'éléments électroluminescents (21, 22, 23) ayant chacun des couleurs d'émission de lumière différentes et sont agencés en anneau de telle sorte que chaque groupe est agencé le long de cercles qui diffèrent quant à leur distance à l'axe optique sur des plans sensiblement identiques qui sont sensiblement orthogonaux à l'axe optique, et la direction d'émission de lumière est agencée dans la direction sensiblement parallèle à l'axe optique (1A).

4. Illuminateur annulaire selon la revendication 1, dans lequel la pluralité d'éléments électroluminescents (20) comporte trois types de diodes électroluminescentes (21, 22, 23) ayant des couleurs d'émission de lumière respectives rouge (R), verte (V) et bleue (B).

5. Illuminateur annulaire selon la revendication 1, dans lequel les moyens de combinaison (30) sont configurés pour inclure des miroirs dichroïques (32, 33) formés selon une forme plane.

6. Illuminateur annulaire selon la revendication 5, dans lequel les miroirs dichroïques (32, 33) ont soit des caractéristiques qui réfléchissent une lumière ayant une longueur d'onde plus courte qu'une longueur d'onde donnée et permettent à une lumière ayant une longueur d'onde plus longue que la longueur d'onde donnée de les traverser, soit des caractéristiques qui permettent à une lumière ayant une longueur d'onde plus courte qu'une longueur d'onde donnée de les traverser et réfléchissent une lumière ayant une longueur d'onde plus longue que la longueur d'onde donnée.

7. Illuminateur annulaire selon la revendication 1, dans lequel la lumière d'éclairage combinée plus loin en aval par rapport aux moyens de combinaison (30) est réglée à une direction sur un plan sensiblement orthogonal à l'axe optique (1A) et est dirigée à l'opposé de l'axe optique, de sorte que les moyens de focalisation sont configurés pour inclure un miroir de réflexion (40) qui focalise la lumière d'éclairage dans la direction de l'axe optique, et le miroir de réflexion comporte une surface de réflexion (42) ayant des courbures données respectives par rapport à deux directions de section transversale parallèle et orthogonale à l'axe optique.

8. Illuminateur annulaire selon la revendication 1, dans lequel la lumière d'éclairage combinée plus loin en aval par rapport aux moyens de combinaison (30) est réglée dans une direction sensiblement parallèle à l'axe optique (1A), de sorte que les moyens de focalisation sont configurés pour inclure un premier miroir de réflexion (64) qui réfléchit la lumière d'éclairage à l'opposé de l'axe optique (1A), et un second miroir de réflexion (66) qui focalise la lumière d'éclairage réfléchie sur le miroir de réflexion dans la direction de l'axe optique sous la forme d'un ensemble, et
au moins un parmi le premier miroir de réflexion (64) et le second miroir de réflexion (66) comporte une surface de réflexion ayant des courbures données respectives par rapport aux deux directions de section transversale parallèle à l'axe optique et orthogonale à celui-ci.

9. Illuminateur annulaire selon la revendication 1, dans lequel la source lumineuse (20) et les moyens de combinaison (30) sont fixés sur un corps d'illuminateur (12), les moyens de focalisation (40) sont montés de telle sorte que les moyens de focalisation sont relativement mobiles par rapport audit corps d'illuminateur (12) dans la direction sensiblement parallèle à l'axe optique (1A), et
l'illuminateur annulaire comporte des m4oyens d'ajustement qui ajustent une position où la lumière d'éclairage est focalisée en effectuant le déplacement relatif du corps d'illuminateur 12 et des moyens de focalisation (40).

10. Illuminateur annulaire selon la revendication 1, dans lequel la lumière d'éclairage combinée plus loin en aval par rapport aux moyens de combinaison (30), est réglée dans une direction sensiblement parallèle à l'axe optique (1A), et les moyens de focalisation sont configurés pour inclure une lentille sensiblement de forme torique ayant un trou à une partie centrale de celle-ci.
